**Europäisches Patentamt**

**European Patent Office**

**Office européen des brevets**

(19)

(11) Veröffentlichungsnummer: **0 089 356**
**B1**

(12) # EUROPÄISCHE PATENTSCHRIFT

(45) Veröffentlichungstag der Patentschrift:
**27.08.86**

(51) Int. Cl.⁴: **G 01 N 1/00**

(21) Anmeldenummer: **82902900.8**

(22) Anmeldetag: **22.09.82**

(86) Internationale Anmeldenummer:
**PCT/DE 82/00189**

(87) Internationale Veröffentlichungsnummer:
**WO 83/01110 (31.03.83** Gazette 83/8)

(54) **VERFAHREN UND VORRICHTUNG ZUR PROBENAHME VON SPURENKOMPONENTEN IN GASEN, FLÜSSIGKEITEN AN FESTKÖRPERN ODER IN OBERFLÄCHENSCHICHTEN.**

(30) Priorität: **23.09.81 DE 3137765**

(43) Veröffentlichungstag der Anmeldung:
**28.09.83 Patentblatt 83/39**

(45) Bekanntmachung des Hinweises auf die Patenterteilung:
**27.08.86 Patentblatt 86/35**

(84) Benannte Vertragsstaaten:
**CH FR GB LI SE**

(56) Entgegenhaltungen:
**WO - A - 81/02632**
**DE - A - 2 022 958**
**DE - A - 2 139 992**
**FR - A - 1 573 147**
**US - A - 3 985 017**

(73) Patentinhaber: **Bruker-Franzen Analytik GmbH,
Kattenturmer Heerstrasse 122, D-2800 Bremen (DE)**

(72) Erfinder: **ODERNHEIMER, Bernhard, Jägerhof 4,
D-3042 Munster (DE)**

(74) Vertreter: **Görtz, Dr. Fuchs, Dr. Luderschmidt
Patentanwälte, Sonnenberger
Strasse 100 Postfach 26 26, D-6200 Wiesbaden (DE)**

ACTORUM AG

## Beschreibung

### Technisches Gebiet

Die Erfindung betrifft ein Verfahren und eine Vorrichtung zur Probenahme von Spurenkomponenten in Gasen, Flüssigkeiten, an Festkörpern oder in Oberflächenschichten zum Zweck der anschliessenden Detektion, Identifikation oder Quantifikation vermittels einer beheizbaren trägergashinterspülten Kontaktmembran eines Eingangskopfes eines Analysengeräts, der eine Probenleitung und/oder gaschromatographische Trennsäule und ein Detektor nachgeschaltet sind.

### Stand der Technik

Es ist bekannt, geringste Spuren organischer Substanzen in Gasen, beispielsweise Luft, in Flüssigkeiten, beispielsweise Wasser, sowie in und an Festkörpern dadurch zu erfassen, dass man die Spurenkomponenten durch Lösungsmittelextraktion, durch Adsorption mittels Gradienten- und Sorptionsrohr (gefüllt z.B. mit Tenax-GC, XAD-2, Aktivkohle, etc. als Sorbentien) oder durch Ausfrieren anreichert. Bei heterogen Systemen, beispielsweise Schwebstoffen in Luft oder Wasser, sind Filter zur Probenahme verwendbar, die nach Beladung einer Lösungsmittelextraktion unterworfen werden.

Spuren, die an Gradienten- oder Sorptionsrohren aus einem Gas adsorptiv angereichert wurden, können gegebenenfalls mit Hilfe einer relativ einfachen Pneumatik durch direktes Ausheizen der Spuren in ein Trägergas desorbiert und dem Gasdetektor zugeführt werden.

In den meisten Fällen ist jedoch eine arbeitsintensive, komplizierte, oft mit Probenverlust durch Verflüchtigung oder Zersetzung verbundene Probenvorbereitung vor Eingabe in das Analysengerät erforderlich, die ein hohes Mass an Sorgfalt und Erfahrung verlangt. Ist das Analysengerät ein Gaschromatograph oder eine GC/MS-Kopplung, so muss die Probe z.B. mittels Injektionsspritze durch ein Septum zur Verdampfung von Lösungsmittel und darin enthaltener Spurenkomponente auf den Trennsäuleneingang gebracht werden.

Die Nachteile der beschriebenen Prozeduren, insbesondere bei Routineanalysen mit grossem Probendurchsatz, sind ebenfalls bekannt. Daher ist versucht worden, flüchtige Spurenkomponenten in Gasen, Flüssigkeiten, wässrigen Schlämmen und festen Granulaten oder Pulvern mit Hilfe von Diaphragmen und Membranseparatoren selektiv angereichert, diskontinuierlich oder kontinuierlich, in das Analysengerät einzubringen. Dabei wird über das Diaphragma/die Membran eine relative Anreicherung ohne Erhöhung des Partialdruckes der zu messenden Komponente nach Durchtritt durch die Membran/das Diaphragma erzielt. Im günstigsten Fall ist ihr Partialdruck dann gleich dem Partialdruck vor der Membran/dem Diaphragma.

Diese Verfahren zielen auf die diskontinuierliche Erfassung leichtflüchtiger Substanzen ab, wie niedere Alkohole, oder permanenter Gase, wie Sauerstoff und Kohlenmonoxid, die jeweils in relativ hoher Konzentration vorliegen (FR-A 1 573 147/1969) oder verlangen bei kontinuierlichem Einsatz einen extrem empfindlichen Detektor, z.B. ein Massenspektrometer mit mehrstufigem, differentiell evakuiertem Membranseperatorsystem (DE-A 1 673 239/1970; DE-A 2 022 958/1970 und DE-A 2 310 264/1973). Die DE-A 2 139 992 beschreibt ein Verfahren und eine Vorrichtung zur Probenahme und zum Aufgeben einer Probe in ein Analysengerät, bei welchem die Probe durch Sorption von einer Probenahmevorrichtung aufgenommen wird und aus dieser in das Analysengerät hinein ausgetrieben wird, wobei die Sorption der Probe bei der Probenahme an der Oberfläche eines festen Formkörpers erfolgt und dieser Formkörper zur Probenaufgabe in eine beheizte Einlasskammer des Analysengeräts eingeführt wird. Dies hat den Nachteil, dass die Probenaufgabe über eine Schleuse erfolgen muss, was die Handhabung kompliziert macht.

In der WO-A 1-81/02 632 ist ein Verfahren und eine Vorrichtung beschrieben zur Probenahme von Spurenkomponenten in Gasen, Flüssigkeiten, an Festkörpern oder in Oberflächenschichten zum Zwecke der anschliessenden Detektion, Identifikation oder Quantifikation vermittels einer beheizbaren trägergashinterspülten Kontaktmembran eines Eingangskopfes eines Analysengeräts, der eine Probenleitung und/oder gaschromatographische Trennsäule und ein Detektor nachgeschaltet sind. Der Eingangskopf lässt sich vorteilhaft für diskontinuierlichen Betrieb als GC-Einlasssystem einsetzen und macht die Injektion durch ein Septum überflüssig. Der Probeneinlass erfolgt hier z.B. in der Weise, dass eine zu untersuchende Lösung sukzessive auf eine trägergasgespülte, auf relativ niedriger Temperatur $T_1$ befindliche Kontaktmembran aufgebracht wird, wobei das Lösungsmittel verdampft und die in der Kontaktmembran nahezu verlustlos konzentrierten zu analysierenden Spurenkomponenten der Lösung erst durch Temperaturerhöhung auf $T_2$ in das Trägergas gelangen. Sind $T_1$ und $T_2$ dem gaschromatographischen Mobilitätsverhalten der Spurenkomponente angepasst und das Trägergasdurchfluss- und das Totvolumen zwischen Membran und Detektor gering, so können hinter der Kontaktmembran insbesondere durch schnelles Aufheizen auf die Desorptionstemperatur $T_2$ selbst mit sehr geringen Absolutmengen, die sich in dem kleinen Membranvolumen sorbiert befinden, kurzzeitig hohe Partialdrucke erzeugt werden, die die Partialdrucke der Spurenkomponenten vor der Membran um Grössenordnungen übertreffen und das Signal/Rausch-Verhältnis des Detektors im gleichen Masse verbessern. Mit dem bekannten Eingangskopf können auch schwerflüchtige Substanzen sehr empfindlich und quantitativ erfasst werden, die sich an einer Oberfläche oder in einer sorbierenden Oberflächenschicht befinden, indem die ausreichend beheizte, robuste und dabei doch möglichst dünne Kontaktmembran direkt in Berührung mit der zu untersuchenden Oberfläche oder Oberflächenschicht gebracht wird.

## Darstellung der Erfindung

Aufgabe der vorliegenden Erfindung ist es, die Empfindlichkeit des bekannten Eingangskopfes bei einfacher Handhabung zu verbessern und ein noch einfacheres, schnelleres und schonenderes Analysenverfahren zu entwickeln.

Gelöst wird die Aufgabe durch die im Vorrichtungs- und Verfahrensanspruch 1 bzw. 8 enthaltenen Merkmale.

Die Kontaktmembran wird so ausgestaltet, dass sie eine möglichst regelmässige geometrische Form aufweist, beispielsweise rechteckig, quadratisch, fünf-, sechs-, acht- und mehreckig oder kreisförmig; bevorzugt wird die Kontaktmembran kreisförmig ausgestaltet. Das Trägergas wird so geleitet, dass es die Kontaktmembran von den Seitenkanten her zur Mitte hin überstreicht. Dies wird dadurch erreicht, dass das Trägergas zunächst von einem vorzugsweise zentral angebrachten Zuführungsrohr an der Unterseite einer Stützplatte für die Kontaktmembran an die Aussenkante der Kontaktmembran geführt wird und von dort aus zur Mitte der Kontaktmembran hinströmt. Hierzu ist es erforderlich, dass in der geometrischen Mitte der Kontaktmembran eine Abführungsleitung für das Trägergas vorgesehen ist. Wie aus einfachen geometrischen Überlegungen hervorgeht, ist die Funktion eines solchen Systems bevorzugt störungsfrei gewährleistet, wenn die Kontaktmembran kreisförmig ausgebildet ist. In diesem Falle strömt das Trägergas vom Umfang der Kontaktmembran her zum Kreismittelpunkt, wo die Abführungsleitung für das Trägergas unmittelbar bis an die Kontaktmembran heranreicht.

Auf die Kontaktmembran wird eine Sammelscheibe aufgebracht, die zur Anreicherung von Spurenkomponenten aus Gas, Flüssigkeiten und Festkörpern geeignet ist. Diese Sammelscheibe muss so beschaffen sein, dass sie die zu analysierenden Bestandteile möglichst selektiv absorbiert. Für viele zu analysierende organische Stoffe hat sich als sorbierende Phase für die Sammelscheibe beispielsweise ein mit Silikongummi belegtes Inertgewebe als zweckmässig erwiesen. Die Sammelscheibe kann aber auch aus Glasfasern, Filterpapier oder Glasfaser-Filterpapier aus sorbierend belegtem Metallblech oder sorbierend belegten Glasplatten bestehen. Die Oberfläche ist der Oberflächengestalt der Kontaktmembran angepasst, wodurch eine möglichst grosse gemeinsame Kontaktfläche gewährleistet ist.

Die Anwendung des Verfahrens und der Vorrichtung erfolgt in der Weise, dass die Sammelscheibe dem zu untersuchenden Medium ausgesetzt ist, beispielsweise der Luft, dem Wasser, der Urin-, Blut-, Speichel-, Schweissprobe, der Haut eines Probanden oder Patienten, einer homogenisierten Lebensmittelprobe, einem Lösungsmittelextrakt, einem Anstrich oder einer anderen festen Oberfläche. Dabei lösen sich jeweils geringe Anteile der zu untersuchenden Spurenkomponente in der Sammelscheibe bzw. ihrer Belegungsschicht, die der im Probenmedium vorhandenen Konzentration proportional sind. Die Sammelscheibe kann als Filterscheibe ausgelegt sein, an der sich beim Durchsaugen von Luft oder Flüssigkeiten Schwebstoffe und andere Partikel abscheiden. Ist die durchströmte Filterscheibe mit einer sorbierenden Phase belegt, so können auch gasförmige Spurenkomponenten angereichert werden.

Zur Analyse der sorbierten oder mechanisch abgeschiedenen Substanzspuren wird die Sammelscheibe an die Kontaktmembran geführt und ausgeheizt. Dadurch wird die Sammelscheibe bei vielen Anwendungen regeneriert, so dass mehrmalige Verwendung möglich ist. Es ist oft zweckmässig, die Sammelscheibe nach der Probenahme der Desorption der Spurenkomponente mit destilliertem Wasser zu spülen und mittels Tupfer mechanisch abzutrocknen.

Das erfindungsgemässe Verfahren und die erfindungsgemässe Vorrichtung lassen sich zu einem standardisierten, universellen Probenahme- und Probeeinlassschnellverfahren für die Detektion, Identifikation und quantitative Bestimmung von Spurenkomponenten mittels GC, MS und GC/MS-Kopplung ausgestalten. Die Oberfläche oder Oberflächenschicht, die bekannterweise mit der Kontaktmembran des Eingangskopfes auf vorhandene Kontaminanten untersucht werden kann, wird dabei vorteilhaft so ausgelegt, dass sie als eine wohldefinierte und standardisierte Sammelscheibe zur Anreicherung von Spurenkomponenten aus Gasen, Flüssigkeiten und Festkörpern geeignet ist.

Zur quantitativen Auswertung der mit der Sammelscheibe erfassten Spuren als repräsentative Probe müssen in einer dem Fachmann geläufigen Weise ausser der Sammelscheibe selbst, die beispielsweise hinsichtlich Material, Oberfläche, Belegungsart und Belegungsschichtdicke, Sorptionsselektivität und -kapazität und Wärmekapazität standardisiert sein kann, auch die Temperaturen von Sammelscheibe und Kontaktmembran, Einwirkzeit und Einwirkart, z.B. Gas/Flüssigkeit in Ruhe oder strömend, Festkörper pulverisiert oder mit glatter Oberfläche, sowie die Kontaktzeit für die Desorption an der Kontaktmembran so definiert sein, wie es der jeweils geforderten Genauigkeit bei Korrelation der Messsignalausbeute mit der tatsächlichen im untersuchten Medium herrschenden Konzentration oder Belegungsdichte adäquat ist.

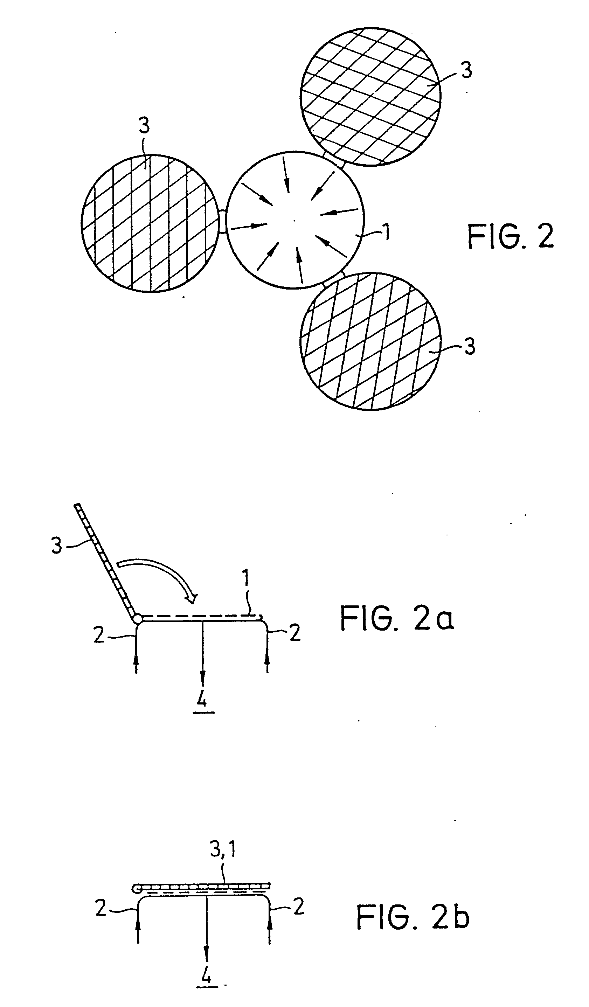

Eine (mehrere) Sammelscheibe(n) kann (können) Bestandteil des Eingangskopfes sein und im Wechsel Sammelphase/Ausheizphase an die Kontaktmembran geführt werden und dort z.B. auf die Kontaktmembran aufgeklappt werden, wie die Fig. 2, 2a und 2b zeigen. Eine solche Anordnung eignet sich besonders als Spürsonde zur Luftüberwachung.

Vorteilhaft ist die Anwendung des Eingangskopfes als Auswertesystem für die Dünnschichtchromatographie (DC). Die DC-Platte wird dabei im einfachsten Fall mit dem DC-Fleck an die Kontaktmembran gebracht.

Ferner bietet das erfindungsgemässe Verfahren eine bequeme Möglichkeit der Kopplung der Flüssigkeits- (LC) und Hochdruckflüssigkeitschromatographie (HPLC) mit einem Massenspektrometer. Die mit der mobilen Phase eluierenden Fraktionen können einzeln auf Sammelscheiben konzentriert und über die Kontaktmembran in die Ionenquelle des MS eingelassen werden. Für manche Anwendungen ist es vorteilhaft, wenn die Sammelscheibe durch spezielle Belegungen zu selektiver Chemiesorption oder zur Derivatisierung bestimmter Komponenten befähigt ist. So werden basische Komponenten, beispielsweise Alkaloide, von einer sauren Belegung selektivreversibel sorbiert und Alkohole beim Aufheizen in Gegenwart wasserentziehender Mittel zu besser GC-gängigen Produkten dehydratisiert. Die Derivatisierung, beispielsweise die Herstellung von Trimethylsilylderivaten, kann bequem in Gegenwart einer unpolar belegten Sammelscheibe erfolgen, die das Derivat beim Abkühlen des Reaktionsgemisches wegen seiner geringeren Polarität bevorzugt sorbiert.

Schliesslich können Bakterien zum Zwecke ihrer Identifikation anhand charakteristischer flüchtiger Bestandteile oder Pyrolyseprodukte durch einfache Abklatschtechnik auf eine Sammelscheibe übertragen und erfindungsgemäss analysiert werden.

Zur Erleichterung der quantitativen Auswertung ist es oft zweckmässig, einen internen Standard zu verwenden.

Sind für ein gegebenes Anwendungsgebiet einmal optimale Parameter gefunden, so lassen sich diese mit geringen laborüblichen Mitteln wie Thermostat und Stoppuhr unschwer konstant halten. Der Probenahme/Auswerte-Zyklus ist der automatisierten Steuerung für viele Anwendungen leicht zugänglich.

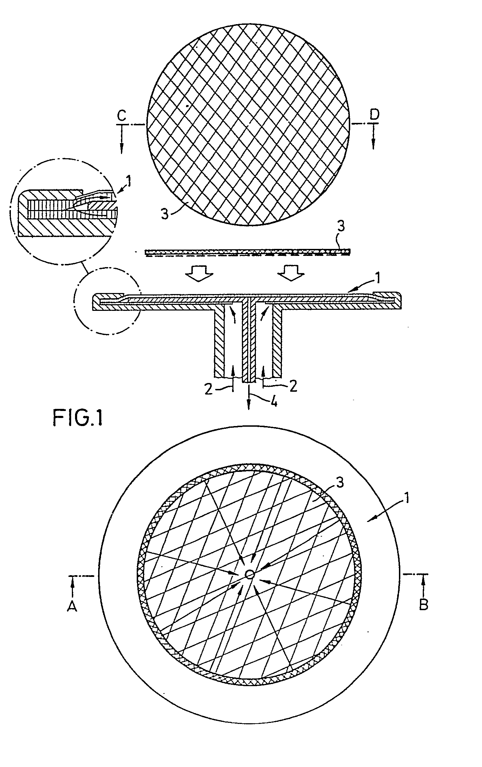

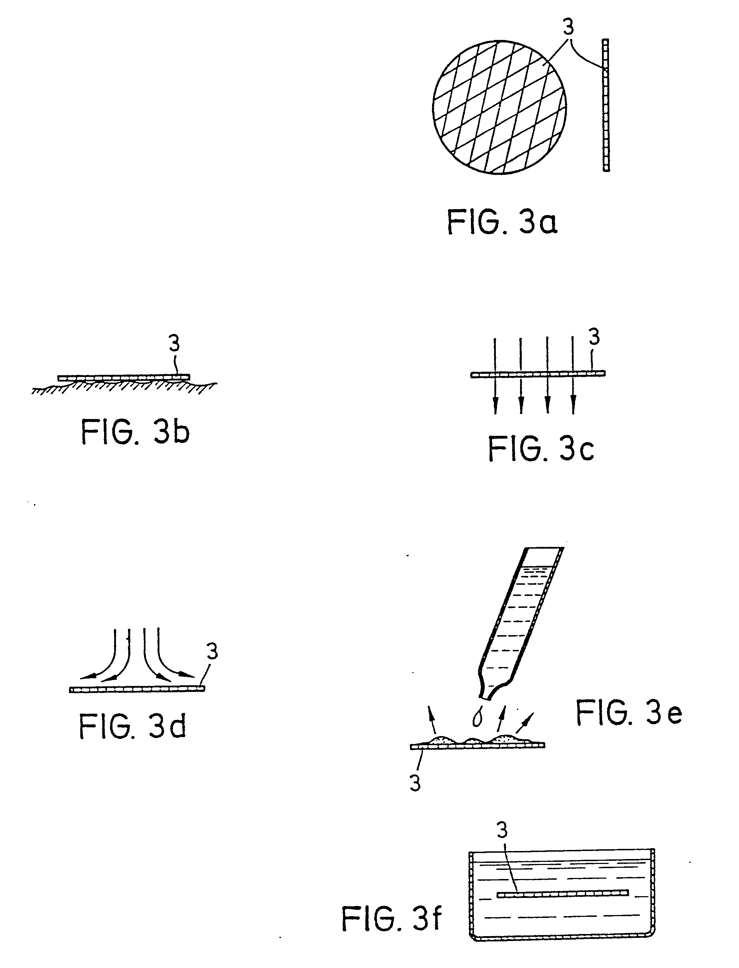

Kurzbeschreibung der Zeichnungen (Fig. 1 und 3a bis 3f) und Beschreibung der besten Ausführungsformen der Erfindung

Fig. 1 zeigt in Querschnitt und Draufsicht ein Ausführungsbeispiel einer geeigneten Vorrichtung mit einer Kontaktmembran 1, die von einem Trägergas 2 hinterspült ist, und eine Sammelscheibe 3, die im Ausführungsbeispiel als eine mit sorbierender Phase, beispielsweise Silikongummi, belegte Inertgeweberonde dargestellt ist. Die Sammelscheibe kann auch ein dünnes Glasfaser-Filterpapier, ein sorbierend belegtes Metallblech oder eine Glasplatte sein. Sie ist der Oberflächengestalt der Kontaktmembran angepasst, damit eine möglichst grosse gemeinsame Kontaktfläche und ein guter Wärme- und Stoffaustausch gewährleistet ist, d.h. das Totvolumen zwischen Sammelscheibe und dem nicht dargestellten Detektor 4 sollte klein sein, so dass hohe Konzentrationen im Trägergas aufgebaut werden können.

Die Fig. 3a zeigt eine bevorzugte Ausgestaltung der Sammelscheibe, die Fig. 3b-3f zeigen verschiedene Möglichkeiten, wie zu untersuchende Proben auf die Sammelscheibe aufgebracht werden können, so die Fig. 3b das Aufbringen der Sammelscheibe auf eine feste Oberfläche, die Fig. 3c und 3d das Auf- bzw. Durchströmen der Sammelscheibe mit Gasen, die Fig. 3e das Auftropfen von Flüssigkeit und die Fig. 3f das Einbringen der Sammelscheibe in eine Flüssigkeit.

Die Erfindung bietet ein einfaches, universell verwendbares und extrem schnelles Probenahme- und Probeeinlassverfahren für die qualitative und quantitative Spurenanalyse mittels Gaschromatographie, Massenspektrometrie und GC/MS-Kopplung. Das Verfahren kann mit besonderem Vorteil bei zahlreichen Routineanwendungen in der Umweltanalytik, Rückstands- und Lebensmittelanalytik, Prozess- und Qualitätskontrolle, in der medizinisch-klinischen Analytik, Toxikologie, Mikrobiologie, Versuchstierkunde, Pharmakologie, Doping-Kontrolle, Kriminaltechnik und Gerichtsmedizin eingesetzt werden.

Gaschromatographen, Massenspektrometer und GC/MS-Kopplungen, die mit herkömmlichen Injektoren bzw. Einlasssystemen ausgestattet sind, können unter geringem Aufwand mit der erfindungsgemässen Vorrichtung umgerüstet werden.

Eine zweckmässig selektiv sorbierende, standardisierte Sammelscheibe wird dem Gas, der Flüssigkeit oder dem Festkörper zur Probenahme und gegebenenfalls gezielten chemischen Umsetzung der zu messenden Spurenkomponente durch Kontakt unter definierten Bedingungen ausgesetzt und anschliessend zur Analyse des Sorbats und/oder seiner Umsetzungsprodukte an die beheizbare, von einem Trägergas hinterspülte Kontaktmembran des Eingangskopfes eines Analysengerätes geführt. Die dabei von der Sammelscheibe quantitativ thermisch desorbierenden Spurenkomponenten gelangen im Zuge eines Lösungs-, Diffusions- und Verdampfungsvorganges durch die Kontaktmembran in das Trägergas und werden von diesem durch eine Probenleitung oder eine gaschromatographische Trennsäule einem Gasanalysator, beispielsweise einem Massenspektrometer (MS), zugeführt.

## Patentansprüche

1. Verfahren zur Probenahme von Spurenkomponenten in Gasen, Flüssigkeiten, an Festkörpern oder in Oberflächenschichten zum Zwecke der anschliessenden Detektion, Identifikation oder Quantifikation vermittels einer beheizbaren trägergashinterspülten Kontaktmembran eines Eingangskopfes eines Analysengeräts, der eine Probenleitung und/oder gaschromatographische Trennsäule und ein Detektor nachgeschaltet sind, dadurch gekennzeichnet, dass auf die Kontaktmembran eine Sammelscheibe aufgebracht wird, die bei einer niedrigen Temperatur dem Gas, der Flüssigkeit oder dem Festkörper zur Probenahme der Spurenkomponente ausgesetzt wird und dann zur Kontaktmembran bewegt wird, und dass die Spurenkomponente beim Kontakt der Sammelscheibe mit der Kontaktmembran bei einer höheren Temperatur thermisch in das Trägergas desorbiert wird.

2. Verfahren nach Anspruch 1, dadurch gekennzeichnet, dass das Analysengerät ein Massenspektrometer, ein GC/MS-System oder ein anderes für die jeweils nachzuweisende Komponente geeignetes Detektorsystem ist.

3. Verfahren nach den Ansprüchen 1 und 2, dadurch gekennzeichnet, dass mehrere Sammelscheiben verwendet werden, die im Wechsel an die Kontaktmembran geführt werden.

4. Verfahren nach den Ansprüchen 1, 2 und 3, dadurch gekennzeichnet, dass die Heranführung der Sammelfläche automatisch gesteuert ist.

5. Verfahren nach den Ansprüchen 1 bis 4, dadurch gekennzeichnet, dass die Ausheiztemperatur $T_2$ durch Heranführen eines auf $T_2$ befindlichen Deckels ausreichender Wärmekapazität augenblicklich erreicht wird und dass der Deckel die Sammelfläche an die Kontaktmembran drückt.

6. Verfahren nach den Ansprüchen 1 bis 4, dadurch gekennzeichnet, dass $T_2$ durch elektrisches Aufheizen der Kontaktmembran unter Verwendung des beschichteten Metallgewebes der Kontaktmembran als Heizleiter erreicht wird.

7. Verfahren nach den Ansprüchen 1 bis 6, dadurch gekennzeichnet, dass die Sammelscheiben Bestandteile einer Spürsonde zur Luft-, Boden- oder Gewässerüberwachung sind.

8. Analysengerät zur Durchführung des Verfahrens nach Anspruch 1, bestehend aus einer beheizbaren trägergashinterspülten Kontaktmembran (1) eines Eingangskopfes, der eine Probenleitung und/oder gaschromatographische Trennsäule und ein Detektor (4) nachgeschaltet sind, gekennzeichnet durch die Zuführung des Trägergases (2) zur Kontaktmembran der Art, dass es die Kontaktmembran (1) vom Rand zur Mitte hin überströmt, wobei das Trägergas (2) zunächst von einer Zuführungsleitung an der Unterseite einer Stützplatte für die Kontaktmembran (1) zum Rand der Kontaktmembran (1) geführt wird und von dort aus zwischen der Stützplatte und der Kontaktmembran (1) zur Mitte strömt und durch eine in der geometrischen Mitte der Kontaktmembran angebrachte Abführungsleitung für das Trägergas (2) abströmt, eine Sammelscheibe (3), die aus mit sorbierender Phase belegtem Inertgewebe, aus Glasfasern, aus Filterpapier, aus Glasfaser-Filterpapier, aus sorbierend belegtem Metallblech oder aus einer sorbierend belegten Glasplatte besteht und deren Oberflächengestalt der Oberflächengestalt der Kontaktmembran (1) angepasst ist.

9. Gerät nach Anspruch 8, dadurch gekennzeichnet, dass die Kontaktmembran (1) kreisförmig oder in einer anderen geometrisch regelmässigen Form ausgebildet ist.

10. Gerät nach Anspruch 8, dadurch gekennzeichnet, dass die Materialien der Sammelscheibe (3) mit einer Polymersubstanz belegt sind.

11. Gerät nach Anspruch 10, dadurch gekennzeichnet, dass als Polymersubstanz Silikonkautschuk verwendet wird.

## Claims

1. Method of sampling trace components in gases, liquids, solids or in surface layers for the purpose of subsequent detection, identification or quantification by means of a heatable contact membrane, flushed with carrier gas, of a receiving head of an analysis apparatus, said membrane is followed by a sample conduit and/or gas chromatographic separating column and a detector, characterized in that onto the contact membrane a collector surface is applied which is exposed to the gas, the liquid or the solid at a low temperature for sampling the trace components and then moved toward the contact membrane, and that the trace component on contact of the collector surface with the contact membrane at a higher temperature is thermally desorbed into the carrier gas.

2. Method according to claim 1, characterized in that the analysis apparatus is a mass spectrometer, a GC/MS system or another detector system suited for the component to be detected.

3. Method according to claims 1 and 2, characterized in that several collector surfaces are used which are alternatingly contacted with the contact membrane.

4. Method according to claims 1, 2 and 3, characterized in that the approaching of the collector surface is automatically controlled.

5. Method according to claims 1 to 4, characterized in that the baking-out temperature $T_2$ is immediately reached through approaching a top of sufficient heat capacity being at $T_2$ and that the top presses the collector surface at the contact membrane.

6. Method according to claims 1 to 4, characterized in that $T_2$ is reached by electrically heating the contact membrane by using the coated metal fabric of the contact membrane as heating conductor.

7. Method according to claims 1 to 6, characterized in that the collector surfaces are components of a probe for monitoring the air, soil or open waters.

8. Analysis apparatus for carrying out the method defined in claim 1, consisting of a heatable contact membrane (1), flushed with carrier gas, of a receiver head, which is followed by a sample conduit and/or gas chromatographic separating column, characterized by the supply of the carrier gas (2) to the contact membrane such that it overflows the contact membrane (1) from the periphery towards the center, whereby the carrier gas (2) is first of all led from a supply conduit at the bottom surface of a supporting plate for the contact membrane (1) to the periphery of the contact membrane (1) and streams from there between the supporting plate and the contact membrane (1) to the center and discharges through a discharge conduit for the carrier gas (2) arranged in the geometrical center of the contact membrane, a collector surface (3) which consists of inert fabric coated with a sorbing phase, of glass fibers, of filter paper, of glass fiber-filter paper, of sorbingly coated sheet metal or of a sorbingly coated glass plate and the surface shape of which is adapted to the surface shape of the contact membrane (1).

9. Apparatus according to claim 8, characterized in that the contact membrane (1) is embodied circular or in a different geometrically regular shape.

10. Apparatus according to claim 8, characterized in that the materials of the collector surface (3) are coated with a polymer substance.

11. Apparatus according to claim 10, characterized in that as polymer substance silicone rubber is used.

**Revendications**

1. Procédé pour prélever des échantillons de composants présents sous forme de traces dans des gaz, des liquides, sur des corps solides ou dans des couches superficielles, aux fins de détection d'identification ou de quantification, au moyen d'une membrane de contact chauffable de la tête d'entrée d'un appareil d'analyse derrière laquelle passe le gaz porteur, et à la suite de laquelle sont montés une canalisation d'échantillons et/ou une colonne de fractionnement par chromatographie gazeuse et un détecteur, caractérisé en ce qu'on place sur la membrane de contact un disque collecteur qui est exposé au gaz, au liquide ou au corps solide à une température basse, aux fins de prélèvement de l'échantillon, et qui est ensuite déplacé en direction de la membrane de contact et en ce que les composants en traces, lorsque le disque collecteur est au contact de la membrane de contact, sont désorbés thermiquement dans le gaz porteur à une température plus élevée.

2. Procédé selon la revendication 1, caractérisé en ce que l'appareil d'analyse est un spectromètre de masse, un système chromatographe en phase gazeuse/spectromètre de masse ou un autre système de détecteur approprié pour les composants à détecter.

3. Procédé selon les revendications 1 et 2, caractérisé en ce qu'on utilise plusieurs disques collecteurs qui sont amenés à tour de rôle à la membrane de contact.

4. Procédé selon les revendications 1, 2 et 3, caractérisé en ce que la surface collectrice est amenée par commande automatique.

5. Procédé selon les revendications 1 à 4, caractérisé en ce que la température de chauffage $T_2$ est obtenue instantanément en approchant un couvercle ayant une capacité thermique suffisante et se trouvant à la température $T_2$ et le couvercle presse la surface collectrice contre la membrane de contact.

6. Procédé selon les revendications 1 à 4, caractérisé en ce qu'on atteint la température $T_2$ en chauffant électriquement la membrane de contact, en utilisant comme conducteur de chaleur le tissu métallique de la membrane de contact pourvu d'un revêtement.

7. Procédé selon les revendications 1 à 6, caractérisé en ce que les disques collecteurs font partie d'une sonde de détection pour la surveillance de l'air, du sol ou des eaux.

8. Appareil d'analyse pour mettre en œuvre le procédé selon la revendication 1, constitué par une membrane de contact (1) chauffable d'une tête d'entrée, derrière laquelle passe le gaz porteur, et à la suite de laquelle sont montés une canalisation d'échantillons et/ou une colonne de fractionnement par chromatographie gazeuse et un détecteur (4), caractérisé par une amenée du gaz porteur (2) à la membrane de contact telle qu'il s'écoule sur la membrane de contact (1) du bord vers le milieu, en ce que le gaz porteur (2) est d'abord amené d'une canalisation d'amenée sur le côté inférieur d'une plaque support pour la membrane de contact (1) jusqu'au bord de la membrane de contact (1), et de là il s'écoule entre la plaque support et la membrane de contact (1) vers le milieu et il est évacué par une canalisation d'évacuation pour le gaz porteur (2) qui arrive au centre géométrique de la membrane de contact, en ce qu'un disque collecteur (3) est constitué par un tissu inerte revêtu d'une phase sorbante, par des fibres de verre, par un filtre en papier, par un filtre en papier et fibres de verre, par une plaque métallique revêtue d'une couche sorbante ou par une plaque de verre revêtue d'une couche sorbante, et en ce que sa configuration de surface est adaptée à la configuration de surface de la membrane de contact (1).

9. Appareil selon la revendication 8, caractérisé en ce que la membrane de contact (1) est circulaire ou a toute autre forme géométrique régulière.

10. Appareil selon la revendication 8, caractérisé en ce que les matériaux du disque collecteur (3) sont revêtus d'une substance polymère.

11. Appareil selon la revendication 10, caractérisé en ce qu'on utilise comme substance polymère un caoutchouc au silicone.

FIG.1

FIG. 2

FIG. 2a

FIG. 2b

FIG. 3a

FIG. 3b

FIG. 3c

FIG. 3d

FIG. 3e

FIG. 3f